# FASCICULE DE BREVET EUROPEEN

(11) **EP 2 457 781 B1**
(45) Date de publication et mention de la délivrance du brevet: **02.10.2013**
(21) Numéro de dépôt: 11188277.5
(22) Date de dépôt: 08.11.2011
(51) Int. Cl.: B60R 21/216

(54) **Agencement de moyens de retenue d'un couvercle**
Anordnung von Mitteln zum Befestigen eines Deckels
Arrangement of a means for retaining a cover

(30) Priorité: 30.11.2010 FR 1059943
(43) Date de publication de la demande: 30.05.2012
(73) Titulaire: EUROSTYLE SYSTEMS, 36000 Châteauroux (FR)
(72) Inventeur: Blanc, Christophe, 36180 HEUGNES (FR); Ganivet, Thibaut, 18400 SAINT CAPRAIS (FR)
(74) Mandataire: Thinat, Michel

(56) Documents cités:
- EP-A1- 1 369 313
- WO-A1-03/011657
- WO-A1-2007/134880
- DE-A1-102009 012 898
- US-A- 4 327 937
- US-A- 5 845 930

## Description

Dans le domaine automobile plus particulièrement, mais aussi dans le domaine d'autres véhicules, par exemple dans les avions, il y a des objets rangés en temps normal dans un compartiment fermé avec un couvercle, ces objets étant sensés sortir du compartiment seulement dans quelques situations prédéterminées. A titre de premier exemple, les véhicules automobiles sont équipés de plus en plus de coussins gonflables, également appelés « airbags ». Les coussins gonflables sont pliés ou enroulés de façon à prendre le moins de place possible et sont rangés par exemple sur le moyeu du volant, au-dessus de la boîte à gants située devant la place à côté du conducteur du véhicule, et de plus en plus aussi dans les parties latérales de l'habitacle, par exemple dans un des montants des portes. Et dans le cas de l'exemple de l'avion, ce sont les masques d'oxygène qui sont logés dans des compartiments situés au-dessus des passagers et fermés avec un couvercle.

Quel que soit l'exemple choisi, on constatera que lors du déclenchement du gonflage d'un coussin gonflable lors d'un accident ou lors de l'ouverture des compartiments de masque à oxygène en cas de dépressurisation de la cabine de l'avion, le couvercle est dégagé plus ou moins subitement, voire violemment et est projeté ou tombe de manière incontrôlée s'il n'est pas retenu au compartiment.

Habituellement, les couvercles sont retenus par des lanières ou par d'autres éléments en forme de bande fixés d'une part sur le couvercle et d'autre part à l'intérieur du compartiment par au moins une agrafe, voir par exemple US-A-5 845 930.

Le but de l'invention est de proposer une fixation plus simple du couvercle sur le compartiment.

Le but de l'invention est atteint avec un agencement de moyens de retenu d'un couvercle d'un compartiment, le couvercle étant recouvert d'un revêtement formé avec une languette dépassant du couvercle par un des côtés du couvercle et le compartiment étant pourvu de moyens d'accrochage formés de façon à permettre à la languette d'être accrochée au compartiment pour pouvoir retenir le couvercle lors d'une ouverture du compartiment, et la languette étant pourvue d'une fente d'accrochage.

En exploitant le fait que dans la plupart des véhicules, le couvercle d'un compartiment logeant un objet destiné à être déployé subitement dans des situations prédéterminées, est pourvu d'un revêtement, généralement d'un revêtement textile, le revêtement est formé avec une languette de façon que le couvercle puisse être fixé au compartiment par accrochage de la languette à l'intérieur du compartiment et, de plus, sans lanière ou autre pièce rapportée.

La présente invention concerne également les caractéristiques ci-après, considérées isolément ou selon toute combinaison techniquement possible :
- la fente d'accrochage est formée dans une zone rigidifiée de la languette ;
- les moyens d'accrochage comprennent une tige surmontée d'une tête de champignon ;
- les moyens d'accrochage se présentent sous la forme d'un crochet à extrémité enroulée vers l'intérieur ;
- le crochet est formé de matière, c'est-à-dire en une seule pièce, avec une paroi du compartiment.

Le but de l'invention est également atteint avec un compartiment pour le rangement d'un élément destiné à être déployé subitement dans des situations prédéterminées, le compartiment étant pourvu d'un couvercle comportant des moyens de retenu agencés comme décrits plus haut.

Selon un mode de réalisation de l'invention, le compartiment est formé avec un couvercle réalisé comme une partie d'une structure dans laquelle le compartiment est formé.

Le but de l'invention est également atteint avec un véhicule automobile comprenant un compartiment dont le couvercle est retenu avec des moyens agencés selon la description plus haut.

D'autres caractéristiques et avantages de la présente invention ressortiront de la description d'un mode de réalisation. La description est faite en référence aux dessins dont
la figure 1 est une vue sur la face avant d'un couvercle d'un compartiment avec des moyens de retenue selon l'invention,
la figure 2 est une vue sur la face arrière du couvercle de la figure 1 et sur les moyens de retenue visibles sur la figure 1,
la figure 3 est une vue en perspective sur un compartiment et un couvercle agencés selon l'invention et
la figure 4 représente un exemple d'un crochet adapté pour la présente invention.

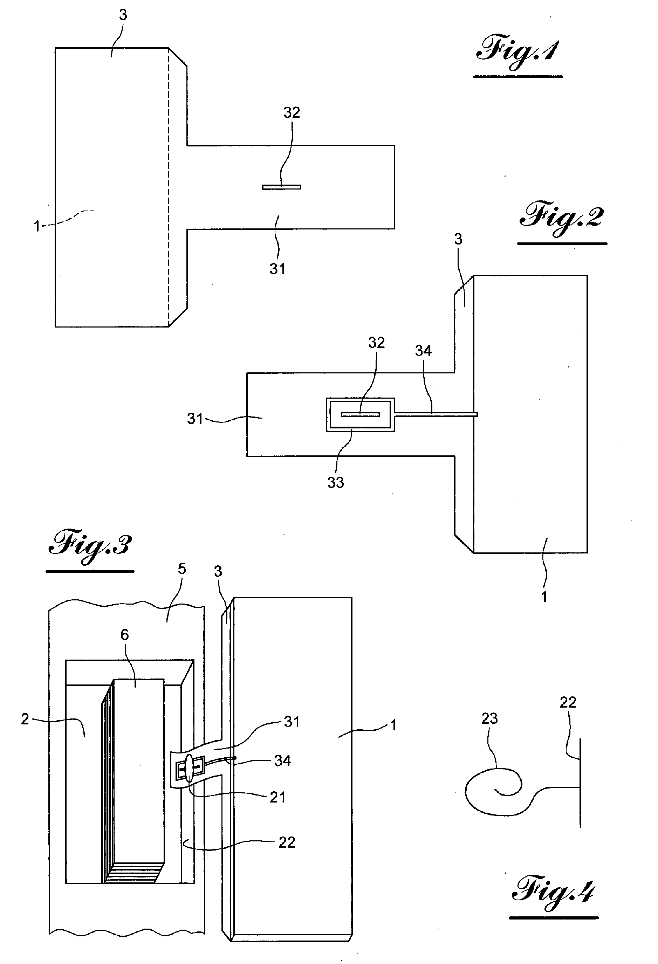

La figure 1 représente la face avant d'un couvercle 1 destiné à fermer un compartiment 2 (voir figure 3). Le couvercle 1 est recouvert d'un revêtement 3 en textile ou en un mélange plastique/textile. Le revêtement 3 dépasse du couvercle sur un côté du couvercle, ce dépassement du revêtement prenant la forme d'une languette 31. La languette 31 est pourvue d'une fente d'accrochage 32 et est assez souple pour pouvoir être rembordée au moment de la mise en place du couvercle 1 sur le compartiment 2. De cette façon, la languette 31 fait partie des moyens de retenue selon l'invention.

Comme le montre la figure 2, la languette 31 est pourvue d'une zone rigidifiée 33 entourant la fente d'accrochage 32. La zone rigidifiée 33 est formée par un cordon en matière plastique semi-rigide infiltré dans et déposé sur la languette 31 sous la forme d'un rectangle entourant la fente d'accrochage 32 et prolongée sous la forme d'une bande unique 34 vers la partie centrale du couvercle et donc du revêtement 3.

Les moyens de retenue comprennent par ailleurs un élément sur lequel la languette 31 peut être accrochée. Cet élément peut être par exemple une tige surmontée d'une tête de champignon 21, comme cela est visible sur la figure 3, ou un crochet 23 ayant une extrémité enroulée vers l'intérieur, comme représentée sur la figure 4. En fonction du mode de réalisation du compartiment 2 et notamment d'une paroi 22 sur laquelle cet élément doit être situé, l'élément peut être formé de matière avec ladite paroi 22 ou rapporté à celle-ci.

Il est par ailleurs également concevable que la languette 31 est pourvue de deux fentes 32 parallèles l'une à l'autre et formant entre elles une bande moyennant laquelle la languette 31 est plus facile à enfiler sur un crochet qu'avec une seule fente 32.

La figure 3 représente comme une vue d'ensemble et en perspective un compartiment 2 formé dans un montant 5 de la structure d'un véhicule et destiné à loger un coussin gonflable 6. Le compartiment 2 est représenté comme étant délimité par quatre parois latérales dont une paroi 22 sur laquelle sont fixées la tige à tête de champignon 21, un crochet en L ou le crochet 23. Il va sans dire que la présente invention s'applique à toute cavité, délimitée ou non par des parois latérales, qui comporte une tige à tête de champignon 21 ou un crochet ou un élément d'accrochage équivalent et qui est susceptible de pouvoir contenir un coussin gonflable ou un autre élément destiné à être déployé subitement dans des situations prédéterminées et d'être recouvert par un couvercle 1.

Dans l'exemple choisi, le couvercle 1 fait partie d'un montant d'un véhicule automobile. Lorsque le couvercle 1 est fixé sur le compartiment 2, la languette 31 est fixée sur la tige à tête de champignon 21 à la façon de la « fermeture d'un bouton » ou par accrochage de la languette sur le crochet 23. Ensuite, le coussin gonflable 6 est placé dans le compartiment 2 et le compartiment est fermé avec le couvercle 1. Lors de la fermeture du compartiment, la partie du revêtement 3 qui dépasse du couvercle 1 est rabattue ou rembordée pour obtenir une présentation propre du montant.

## Revendications

1. Agencement de moyens de retenue d'un couvercle (1) d'un compartiment (2), le couvercle (1) étant recouvert d'un revêtement (3) formé avec une languette (31) dépassant du couvercle (1) par un des côtés du couvercle (1), **caractérisé en ce que** le compartiment (2) est pourvu de moyens d'accrochage (21) formés de façon à permettre à la languette (31) d'être accrochée au compartiment (2) pour pouvoir retenir le couvercle (1) lors d'une ouverture du compartiment (2), et
**en ce que** la languette (31) est pourvue d'une fente d'accrochage (32).

2. Agencement selon la revendication 1, **caractérisé en ce que** la fente d'accrochage (32) est formée dans une zone (33) rigidifiée de la languette (31).

3. Agencement selon la revendication 1 ou 2, **caractérisé en ce que** les moyens d'accrochage comprennent une tige surmontée d'une tête de champignon (21).

4. Agencement selon la revendication 1 ou 2, **caractérisé en ce que** les moyens d'accrochage se présentent sous la forme d'un crochet à extrémité enroulée (23) vers l'intérieur.

5. Compartiment adapté au rangement (2) d'un élément (6) destiné à être déployé subitement dans des situations prédéterminées, **caractérisé en ce qu'**il est pourvu d'un couvercle (1) pourvu de moyens de retenue agencés selon l'une quelconque des revendications 1 à 4.

6. Compartiment selon la revendication 5 adapté pour le rangement d'un coussin gonflable (6), **caractérisé en ce que** le couvercle (1) est réalisé comme une partie d'une structure (5) dans laquelle le compartiment (2) est formé.

7. Véhicule avec un compartiment selon la revendication 5 ou 6.

## Patentansprüche

1. Anordnung von Mitteln zum Befestigen eines Deckels (1) eines Fachs (2), wobei der Deckel (1) mit einem Überzug (3) bedeckt ist, der mit einer Zunge (31) gebildet ist, die an einer der Seiten des Deckels (1) über den Deckel (1) hinausragt, **dadurch gekennzeichnet, dass** das Fach (2) mit Klemmmitteln (21) ausgestattet ist, die derart geformt sind, dass es der Zunge (31) erlaubt ist, am Fach (2) angeklemmt zu sein, um den Deckel (1) bei einer Öffnung des Fachs (2) zu befestigen, und dass die Zunge (31) mit einem Klemmschlitz (32) ausgestattet ist.

2. Anordnung nach Anspruch 1, **dadurch gekennzeichnet, dass** der Klemmschlitz (32) in einer verstärkten Zone (33) der Zunge (31) ausgebildet ist.

3. Anordnung nach Anspruch 1 oder 2, **dadurch gekennzeichnet, dass** die Klemmmittel eine Stange umfassen, die von einem Pilzkopf (21) gekrönt ist.

4. Anordnung nach Anspruch 1 oder 2, **dadurch gekennzeichnet, dass** die Klemmmittel die Form eines Hakens mit nach innen gerolltem Ende (23) haben.

5. Fach, das zum Verstauen (2) eines Elements (6) geeignet ist, das dazu bestimmt ist, plötzlich in vorbestimmten Situationen entfaltet zu werden, **dadurch gekennzeichnet, dass** es mit einem Deckel (1) ausgestattet ist, der mit Befestigungsmitteln ausgestattet ist, die gemäß einem der Ansprüche 1 bis 4 ausgebildet sind.

6. Fach nach Anspruch 5, das zum Verstauen eines aufblasbaren Kissens (6) geeignet ist, **dadurch gekennzeichnet**, das der Deckel (1) als ein Teil einer Struktur (5) ausgebildet ist, in der das Fach (2) ausgebildet ist.

7. Fahrzeug mit einem Fach nach Anspruch 5 oder 6.

## Claims

1. An arrangement of a means for retaining a cover (1) of a compartment (2), the cover (1) being covered with coating (3) formed with a tongue (31) protruding from the cover (1) through one of the sides of the cover (1), **characterized in that** the compartment (2) is provided with catching means (21) formed so as to allow the tongue (31) to be attached to the compartment (2) to be able to retain the cover (1) during opening of the compartment (2), and **in that** the tongue (31) is provided with a locking slit (32).

2. The arrangement according to claim 1, **characterized in that** the locking slit (32) is formed in a stiffened area (33) of the tongue (31).

3. The arrangement according to claim 1 or 2, **characterized in that** the locking means comprise a rod topped by a mushroom head (21).

4. The arrangement according to claim 1 or 2, **characterized in that** the locking means assume the form of a hook with an end (23) wound inward.

5. A compartment suitable for storing (2) an element (6) designed to be deployed suddenly in predetermined situations, **characterized in that** it is provided with a cover (1) provided with retaining means arranged according to any one of claims 1 to 4.

6. The compartment according to claim 5, suitable for storing an inflatable cushion (6), **characterized in that** the cover (1) is made as part of a structure (5) in which the compartment (2) is formed.

7. A vehicle with a compartment according to claim 5 or 6.
